# EUROPÄISCHE PATENTSCHRIFT

(11) **EP 2 638 295 B1**
(45) Veröffentlichungstag und Bekanntmachung des Hinweises auf die Patenterteilung: **11.01.2017**
(21) Anmeldenummer: 11782586.9
(22) Anmeldetag: 08.11.2011
(51) Int. Cl.: F04D 29/26, F04D 29/32, F04D 29/02, B29C 45/14

(54) **KUNSTSTOFFLÜFTER MIT EINGEBETTETEM METALLRING**
PLASTIC FAN WITH EMBEDDED METAL RING
VENTILATEUR EN MATIÈRE PLASTIQUE AVEC ANNEAU MÉTALLIQUE ENCASTRÉ

(30) Priorität: 09.11.2010 DE 102010043607
(43) Veröffentlichungstag der Anmeldung: 18.09.2013
(73) Patentinhaber: MAHLE Behr GmbH & Co. KG, 70469 Stuttgart (DE)
(72) Erfinder: VOLLERT, Ulrich, 70567 Stuttgart (DE)
(74) Vertreter: Grauel, Andreas
(86) Internationale Anmeldenummer: PCT/EP2011/069690
(87) Internationale Veröffentlichungsnummer: WO 2012/062778

(56) Entgegenhaltungen:
- DE-A1- 2 523 230
- DE-T2- 60 209 546
- US-A1- 2003 086 787

## Beschreibung

Die Erfindung betrifft einen Lüfter für ein Kraftfahrzeug gemäß dem Oberbegriff des Anspruches 1, ein Lüftersystem gemäß dem Oberbegriff des Anspruches 5 und ein Kühlersystem gemäß dem Oberbegriff des Anspruches 7.

In Kraftfahrzeugen, insbesondere Nutzkraftfahrzeugen, werden Kühlersysteme eingesetzt, um mittels eines Wärmeübertragers die Abwärme eines Verbrennungsmotors des Kraftfahrzeuges an die Umgebung abzugeben. Durch den Wärmeübertrager strömt Kühlflüssigkeit zur Übertragung der Abwärme des Verbrennungsmotors an die Umgebungsluft. Ferner kann am Wärmeübertrager ein weiterer als Kondensator ausgebildeter Wärmeübertrager angeordnet sein. Der oder die Wärmeübertrager sind an einer Kühlerzarge befestigt und an einer Lüfteröffnung der Kühlerzarge ist ein Lüfter bzw. ein Lüftersystem angeordnet. Die im Allgemeinen aus Kunststoff hergestellte Kühlerzarge kanalisiert dabei den Luftstrom durch den Wärmeübertrager, wobei durch eine Lüfteröffnung mittels des Lüfters Luft durch den Wärmeübertrager zur Erhöhung der Kühlleistung des Wärmeübertragers gefördert wird. Das Lüftersystem weist dabei eine Antriebswelle, den Lüfter mit einem Lüfterrad und Lüfterschaufeln, eine Viskokupplung sowie eine Antriebswelle auf. Die Antriebswelle ist aufgrund einer mechanischen Verbindung, z. B. mit einer Kurbelwelle, von dem Verbrennungsmotor angetrieben.

Das Lüfterrad besteht dabei aus einem Kunststoffring und einem Stahlring. Der Stahlring ist mittels Spritzgießen mit dem Kunststoffring verbunden bzw. in diesen eingebettet und an einem radialen inneren Ende des Stahlringes ist der Stahlring außerhalb des Kunststoffringes angeordnet, d. h. ein radiales inneres Ende bzw. ein radialer innerer Endbereich des Metallringes wurde nicht umspritzt. Am inneren Endbereich in radialer Richtung betrachtet sind am Stahlring Befestigungsöffnungen ausgebildet mittels denen der Stahlring und damit auch der Lüfter mit Schrauben an Befestigungsbohrungen der Viskokupplung befestigt ist. Der Stahlring weist zusätzlich eine große Anzahl von Formschlussöffnungen auf. Die Formschlussöffnungen sind dabei an einem radialen äußeren Endbereich des Stahlringes ausgebildet und in den Kunststoffring eingebettet bzw. umspritzt, so dass an den Formschlussöffnungen des Stahlringes eine formschlüssige Verbindung zwischen dem Stahlring und dem Kunststoffring besteht. Die Formschlussöffnungen des Stahlrings werden dabei beispielsweise mit Laser- oder Wasserstrahlschneiden hergestellt. Aufgrund der Vielzahl an erforderlichen Formschlussöffnungen für eine ausreichende formschlüssige Verbindung zwischen dem Stahlring und dem Kunststoffring fallen hohe Herstellungskosten für die große Anzahl an Formschlussöffnungen an. Die Befestigungsöffnungen sind ferner vorzugsweise an Laschen des Stahlringes ausgebildet.

Das Dokument DE 602 09 546 T2 offenbart einen Lüfter entsprechend dem Oberbegriff von Anspruch 1.

Die Aufgabe der vorliegenden Erfindung besteht deshalb darin, einen Lüfter für ein Kraftfahrzeug, ein Lüftersystem und ein Kühlersystem zur Verfügung zu stellen, bei dem der Lüfter in der Herstellung einfach und preiswert ist und eine zuverlässige formschlüssige Verbindung zwischen dem Stahlring und dem Kunststoffring besteht.

Diese Aufgabe wird gelöst mit einem Lüfter für ein Kraftfahrzeug, umfassend ein Lüfterrad, das Lüfterrad umfassend einen Metallring und einen Kunststoffring, wobei der Metallring in den Kunststoffring teilweise eingebettet ist und der Metallring vorzugsweise mit wenigstens drei Befestigungsöffnungen zum Befestigen des Lüfters versehen ist, an dem Lüfterrad angeordnete Lüfterschaufeln, wobei ein radiales inneres Ende des Metallringes in den Kunststoffring vollständig eingebettet ist. Ein radiales inneres Ende des Metallringes und/oder ein radialer innerer Endbereich des Metallringes ist somit in den Kunststoffring eingebettet, so dass an dem radialen inneren Ende und/oder an dem radialen inneren Endbereich des Metallringes eine zusätzliche form- und/oder stoffschlüssige Verbindung zwischen dem Metallring und dem Kunststoffring besteht. Dadurch sind an dem Metallring eine wesentlich geringere Anzahl an Formschlussöffnungen erforderlich für eine formschlüssige Verbindung zwischen dem Metallring und dem Kunststoffring. Dadurch können in vorteilhafter Weise die Kosten bei der Herstellung des Metallringes reduziert werden, weil das aufwendige Laser- oder Wasserstrahlschneiden zur Herstellung der Formschlussöffnungen nicht mehr oder in einer wesentlich geringeren Anzahl erforderlich ist.

Insbesondere weist der Metallring wenigstens drei radiale innere Laschen auf und an den Laschen ist je eine Befestigungsöffnung ausgebildet.

Das radiale innere Ende des Metallringes und/oder der radiale innere Endbereich des Metallringes ist vollständig in den Kunststoffring eingebettet, so dass dadurch am inneren Ende und/oder am inneren Endbereich des Metallringes eine besonders gute form- und/oder kraftschlüssige Verbindung zwischen dem Metallring und dem Kunststoffring zur Verfügung gestellt werden kann. Der Metallring ist somit vollständig von dem Kunststoffring umspritzt und lediglich im Bereich der Befestigungsöffnungen des Metallringes liegt keine Einbettung oder Umspritzung des Metallringes in den Kunststoffring vor, so dass an den Befestigungsöffnungen Befestigungselemente, z. B. Schrauben, zur Fixierung des Lüfters an der Viskokupplung angeordnet werden können. Damit kann am im Wesentlichen gesamten Metallring eine form- und/oder stoffschlüssige Verbindung zwischen dem Metallring und dem Kunststoffring hergestellt werden.

In einer ergänzenden Ausgestaltung ist der Metallring, abgesehen von einem Bereich an den wenigstens drei Befestigungsöffnungen, vollständig in den Kunststoffring eingebettet.

In einer Variante weist der Metallring an den wenigstens drei inneren Laschen keine Einbettung in den Kunststoffring auf.

Zweckmäßig sind die Lüfterschaufeln einteilig aus Kunststoff mit dem Lüfterrad aus, vorzugsweise thermoplastischen, Kunststoff ausgebildet und/oder das Lüfterrad und die Lüfterschaufeln sind mit Spritzgießen hergestellt und/oder der Metallring ist mit Umspritzen in den Kunststoffring eingebettet und/oder der Metallring weist wenigstens 1, 3, 5 oder 10 Formschlussöffnung bzw. Formschlussöffnungen auf, welche in den Kunststoffring eingebettet ist bzw. sind und damit der Metallring formschlüssig mit dem Kunststoffring verbunden ist und/oder der Metallring weist weniger als 20, 30 oder 40 Formschlussöffnungen auf und/oder der Metallring besteht wenigstens teilweise, insbesondere vollständig, aus Stahl oder Aluminium und/oder die wenigstens eine Formschlussöffnung und/oder die wenigstens drei Befestigungsöffnungen ist bzw. sind im Wesentlichen kreisförmig, ellipsenförmig oder quadratisch ausgebildet.

Erfindungsgemäßes Lüftersystem für ein Kraftfahrzeug, insbesondere Nutzkraftfahrzeug, umfassend einen Lüfter, eine Kupplung, insbesondere Viskokupplung, an welcher der Lüfter befestigt ist, eine Antriebswelle wobei der Lüfter als ein in dieser Schutzrechtsanmeldung beschriebener Lüfter ausgebildet ist.

In einer weiteren Ausführungsform ist der Lüfter mit Befestigungselementen, z. B. Schrauben oder Nieten, an der Kupplung befestigt, vorzugsweise indem die Befestigungselemente in den Befestigungsöffnungen des Metallringes und in Befestigungsbohrungen in der Kupplung angeordnet sind. Der Lüfter kann somit mit den Befestigungselementen z. B. Schrauben, vorzugsweise lösbar mit der Kupplung befestigt werden.

Erfindungsgemäßes Kühlersystem für ein Kraftfahrzeug, umfassend eine Kühlerzarge mit einer Lüfteröffnung, einen an der Kühlerzarge befestigten Wärmeübertrager, einen Lüfter und/oder ein Lüftersystem, welches an der Lüfteröffnung angeordnet ist, wobei der Lüfter als ein in dieser Schutzrechtsanmeldung beschriebener Lüfter ausgebildet ist und/oder das Lüftersystem als ein in dieser Schutzrechtsanmeldung beschriebenes Lüftersystem ausgebildet ist.

Im Nachfolgenden werden Ausführungsbeispiele der Erfindung unter Bezugnahme auf die beigefügten Zeichnungen näher beschrieben. Es zeigt:
- Fig. 1: eine Vorderansicht eines aus dem Stand der Technik bekannten Lüfters,
- Fig. 2: einen Schnitt A-A eines erfindungsgemäßen Lüfters mit einer Schnittführung analog der Darstellung in Fig. 1,
- Fig. 3: einen Schnitt B-B eines erfindungsgemäßen Lüfters mit einer Schnittführung analog der Darstellung in Fig. 1,
- Fig. 4: eine Vorderansicht eines Stahlringes in einem ersten Ausführungsbeispiel mit einer Einbettung in einen Kunststoffring,
- Fig. 5: eine Vorderansicht des Stahlringes in einem zweiten Ausführungsbeispiel mit einer ersten Einbettung in den Kunststoffring und
- Fig. 6: eine Vorderansicht des Stahlringes in einem nicht zur Erfindung gehörenden Beispiel mit einer zweiten Einbettung in den Kunststoffring.

In Kraftfahrzeugen werden Kühlersysteme (nicht dargestellt) eingesetzt um Abwärme des Verbrennungsmotors an die Umgebung abzugeben. Eine Kühlerzarge, z. B. aus Metall oder Kunststoff, weist eine Lüfteröffnung auf an welcher ein Lüfter 1 bzw. ein Lüftersystem 26 angeordnet ist. An der Kühlerzarge ist ferner ein Wärmeübertrager zur Abgabe von Wärme an die Umgebung befestigt und von dem Lüfter 1 bzw. dem Lüftersystem 26 wird durch die Lüfteröffnung Luft durch den Wärmeübertrager gefördert, so dass dadurch die Wärmeübertragung von dem Wärmeübertrager an die Umgebungsluft erhöht werden kann. Der Lüfter 1 mit einem Lüfterrad 2 und Lüfterschaufeln 3 ist dabei in einem Nutzkraftfahrzeug durch eine Antriebswelle 19 mechanisch direkt mit dem Verbrennungsmotor verbunden und von diesem angetrieben. In Personenkraftwagen wird der Lüfter im Allgemeinen von einem Elektromotor (nicht dargestellt) angetrieben.

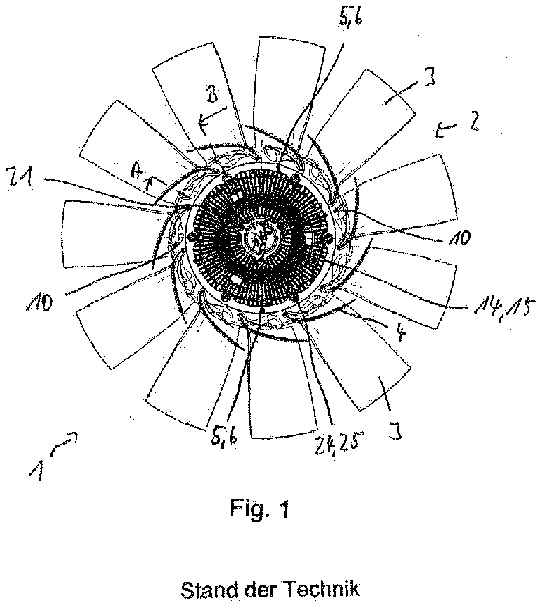

In Fig. 1 ist eine Vorderansicht eines aus dem Stand der Technik bekannten Lüfters 1 dargestellt, welcher an einer als Viskokupplung 15 ausgebildeten Kupplung 14 befestigt ist. Ein Lüfterrad 2 des Lüfters weist einen Kunststoffring 10 auf und an dem Kunststoffring 10 sind einteilig mit dem Kunststoffring 10 Lüfterschaufeln 3 ausgebildet. Die Lüfterschaufeln 3 dienen zum Fördern der Luft durch den Wärmeübertrager bzw. die Lüfteröffnung, innerhalb derer der Lüfter 1 angeordnet ist (nicht dargestellt). An dem Kunststoffring 10 sind ferner auch Luftleitelemente 4 ausgebildet. In den Kunststoffring 10 ist ein als Stahlring 6 ausgebildeter Metallring 5 eingebettet und an einem radialen inneren Endbereich des Stahlringes 6 ist der Stahlring 6 nicht in den Kunststoffring 10 eingebettet und damit in Fig. 1 auch sichtbar. Der radiale innere Endbereich umfasst beispielsweise weniger als 40%, 30%, 20%, 10% oder 5% der radialen Gesamtausdehnung des Metallringes, wobei sich radial vorzugsweise auf die Rotationsachse 20 bezieht. An diesem nicht eingebetteten inneren radialen Endbereich des Stahlringes 6 sind in Fig. 1 nicht dargestellte Befestigungsöffnungen 11 ausgebildet, in welchen Schrauben 25 als Befestigungselemente 24 angeordnet sind zur Befestigung bzw. Fixierung des Lüfters 1 an der Viskokupplung 15. An einem äußeren radialen Endbereich der Viskokupplung 15, welche in Fig. 1 sichtbar ist, sind Rückströmöffnungen 21 vorhanden.

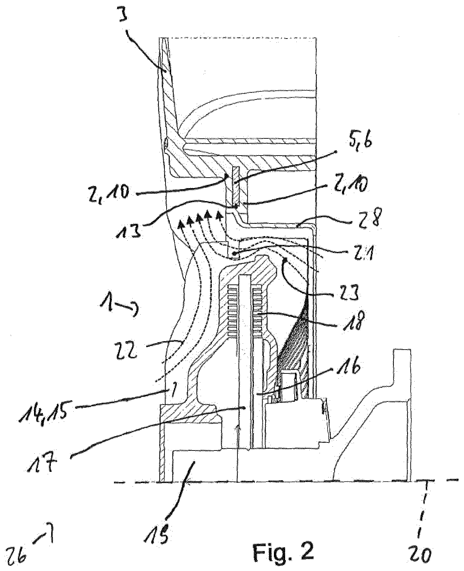

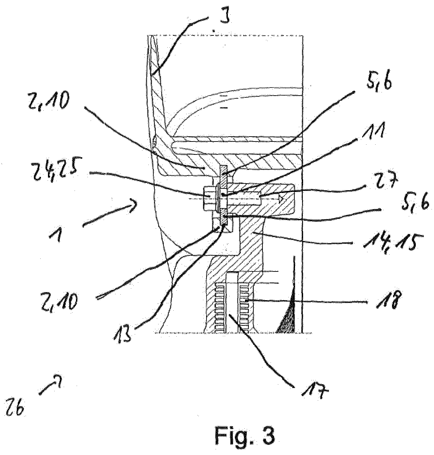

In Fig. 2 und 3 ist ein Schnitt des erfindungsgemäßen Lüfters 1 bzw. eines erfindungsgemäßen Lüftersystems 26 dargestellt. Der erfindungsgemäße Lüfter 1 bzw. das erfindungsgemäße Lüftersystem 26 ist dabei in Fig. 2 in einem Schnitt A-A des Lüfters 1 gemäß der Darstellung in Fig. 1 analog dargestellt und in Fig. 3 ein Schnitt B-B des erfindungsgemäßen Lüfters 1 analog zu der in Fig. 1 dargestellten Schnittbildung. In Fig. 2 und 3 ist somit ein Schnitt des erfindungsgemäßen Lüfters 1 bzw. des erfindungsgemäßen Lüftersystems 26 parallel zu einer Rotationsachse 20 der Antriebswelle 19 dargestellt. Das Lüftersystem 26 umfasst den Lüfter 1, die Antriebswelle 19 und die Viskokupplung 15. Die Viskokupplung 15 umfasst dabei eine Primärscheibe 16, eine Grundscheibe 17 und ein Labyrinth 18, innerhalb dessen eine viskose Flüssigkeit angeordnet ist. Zur Kühlung des nicht dargestellten Wärmeübertragers wird mit den Lüfterschaufeln 3 des Lüfters 1 Luft durch den Wärmeübertrager bewegt bzw. gefördert. Dabei steht die Antriebswelle 19 beispielsweise mit einer Kurbelwelle eines Verbrennungsmotors in direkter mechanischer Verbindung, so dass die Drehzahl der Antriebswelle 19 beispielsweise der Drehzahl der Kurbelwelle des Verbrennungsmotors entspricht. In den verschiedenen Betriebszuständen des Verbrennungsmotors ist es nicht immer erforderlich, dass die Drehzahl des Lüfters 1, d. h. der Lüfterschaufeln 3, der Drehzahl der Kurbelwelle bzw. der Antriebswelle 19 entsprechen soll, so dass mit Hilfe der Viskokupplung 15 die Drehzahl des Lüfters 1 von der Drehzahl der Antriebswelle 19 entkoppelt, d. h. reduziert werden kann. Ist es somit beispielsweise erforderlich, dass aufgrund der Betriebszustände des Verbrennungsmotors und entsprechender Außentemperaturen der Lüfter 1 keine Rotationsbewegung ausführt, kann mit Hilfe der Viskokupplung 15 der Lüfter 1 mechanisch von der Antriebswelle 19 entkoppelt werden und bei einer geringen erforderlichen Leistung des Lüfters 1 kann die Drehzahl des Lüfters 1 beispielsweise der Hälfte der Drehzahl der Antriebswelle 19 bzw. der Kurbelwelle des Verbrennungsmotors betragen.

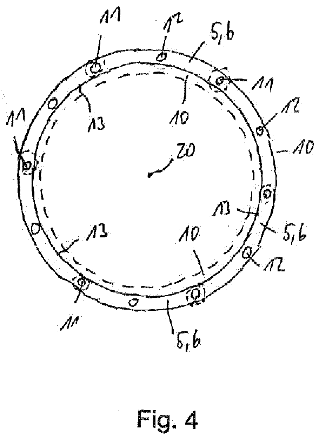

Das Lüfterrad 2 mit dem Kunststoffring 10 und Strömungsführungselementen 28 ist einteilig mittels Spritzgießen in einem Spitzgusswerkzeug zusammen mit den Lüfterschaufeln 3 hergestellt. Dabei wird beim Spritzgießen der Stahlring 6 in das Spritzgusswerkzeug eingelegt und dadurch von dem Kunststoff zur Herstellung der Lüfterschaufeln 3 des Kunststoffringes 10 und der Strömungsführungselemente 28 umspritzt. Der Lüfter 1 kann dabei auch ohne den Strömungsführungselementen 28 ausgebildet sein (nicht dargestellt). In Fig. 4 ist ein Schnitt durch den Stahlring 6 und den Kunststoffring 10 parallel zu einer von dem Stahlring 6 aufgespannten Ebene dargestellt, d. h. senkrecht zu der Zeichenebene von Fig. 2 und 3. Der in Fig. 4 dargestellte Stahlring 5, welcher in dem Lüfter 1 gemäß Fig. 2 und 3 verwendet ist, weist dabei ein radiales inneres Ende 13 auf. In den Stahlring 6 sind die Befestigungsöffnungen 11 (Fig. 3 und 4) eingearbeitet. In die Befestigungsöffnungen 11 sind die Schrauben 25 als Befestigungselemente 24 eingeführt und ein Schraubenkopf der Schrauben 25 liegt dabei auf dem Stahlring 6 im Bereich der Befestigungsöffnung 11 auf und die Schraube 25 ist ferner in eine Befestigungsbohrung 27 der Viskokupplung 15 (Fig. 3) eingeführt und aufgrund eines Gewindes an der Schraube 25 und eines entsprechenden Gegengewindes an der Viskokupplung 15 an der Befestigungsbohrung 27 ist der Lüfter 1 in analoger Weise wie der in Fig. 1 dargestellte Lüfter 1 an der Viskokupplung 15 befestigt.

Ein radiales inneres Ende des Kunststoffringes 10 ist in Fig. 4 strichliert dargestellt. Der in Fig. 4 dargestellte Stahlring 6 ist somit an dem radialen inneren Ende 13 des Stahlringes 6 vollständig von dem Kunststoff des Kunststoffringes 10 umspritzt. Lediglich im Bereich der Befestigungsöffnungen 11 ist der Stahlring 6 nicht von dem Kunststoff des Kunststoffringes 10 umspritz, um im Bereich der Befestigungsöffnungen 11 die Schrauben 25 auf den Stahlring 6 auflegen zu können und in die Befestigungsöffnungen 11 einführen zu können. Diese Ausnehmungen an Kunststoff des Kunststoffringes im Bereich der Befestigungsöffnungen 11 sind in Fig. 4 ebenfalls strichliert dargestellt. Das radiale äußere Ende des Kunststoffringes 10 ist in Fig. 4 nicht mit einer strichlierten Linie dargestellt.

In der Schnittbildung gemäß Fig. 2 des Stahlringes 6 und des Kunststoffringes 10 ist somit der Stahlring 6 vollständig von dem Kunststoffring 10 umspritzt und in der Schnittbildung gemäß Fig. 3 ist der Stahlring 6 ebenfalls vollständig von dem Kunststoffring 10 umspritzt und lediglich im Bereich der Befestigungsöffnungen 11 ist der Stahlring 6 nicht vom Kunststoff des Kunststoffringes 10 umspritzt bzw. eingebettet. Der Stahlring 6 weist dabei sechs Befestigungsöffnungen 11 auf, so dass der Lüfter 1 mit sechs Schrauben 25 an der Viskokupplung 15 befestigt ist. Ferner sind an dem Stahlring 6 auch zusätzlich sechs Formschlussöffnungen 12 vorhanden. Die Formschlussöffnungen 12 (Fig. 4) sind dabei vollständig in den Kunststoffdes Kunststoffringes 10 eingebettet und an den Formschlussöffnungen 12 liegt eine Durchspritzung mit Kunststoff des Kunststoffringes 10 vor, so dass dadurch eine formschlüssige Verbindung zwischen dem Stahlring 6 und dem Kunststoff des Kunststoffringes 10 besteht.

Zwischen dem Kunststoffring 10 und der Viskokupplung 15 besteht außerhalb eines Bereiches an den Befestigungsbohrungen 27 (Fig. 3) eine Rückströmöffnung 21 (Fig. 2) bzw. eine Vielzahl von Rückströmöffnungen 21. Die von den Lüfterschaufeln 3 geförderte Luft wird dabei gemäß der Darstellung in Fig. 2 und 3 von den Lüfterschaufeln 3 von links nach rechts durch die Lüfteröffnung an der Kühlerzarge gefördert. Aufgrund des dadurch entstehenden Unterdruckes saugseitig an dem Lüfter 1, kann somit Luft durch die Rückströmöffnungen 21 als axiale Rückströmung 23 von einem Bereich in Strömungsrichtung der Luft nach den Lüfterschaufeln 3 in den Saugbereich vor dem Lüfter 1 zurückströmen und dadurch die Viskokupplung 15 kühlen. Ferner tritt im Bereich der Saugseite des Lüfters 1 auch eine radiale Strömung 22 nach außen auf, weil im Bereich der Viskokupplung 15 als Luftbarriere die Luft nicht in axialer Richtung der Rotationsachse 20 strömen kann und lediglich im Bereich der Lüfterschaufeln 3 in axialer Richtung von links nach rechts durch die Lüfteröffnung strömt.

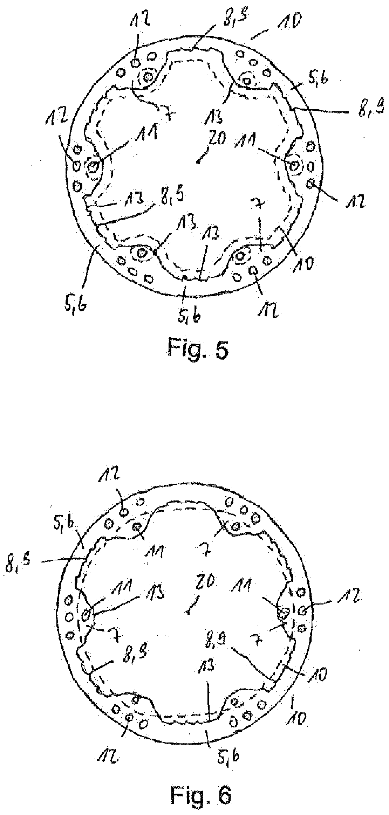

In Fig. 5 und 6 ist ein zweites Ausführungsbeispiel des Stahlringes 6 dargestellt, wobei die Ausführung von Abb. 6 jedoch nicht zum Gegenstand der Erfindung gehört.

Der Stahlring 6 weist an seinem radialen inneren Endbereich sechs Laschen 7 auf und an jeder Lasche 7 ist jeweils eine Befestigungsöffnung 11 vorhanden. Ferner sind an dem radialen inneren Ende 13 des Stahlringes 6 radiale innere Zähne 9 als radiale innere Auswölbungen 8 vorhanden. Die Zähne 9 bzw. Auswölbungen 8 sind dabei wesentlich kleiner als die Laschen 7. Im Bereich der Laschen 7 sind ferner jeweils drei Formschlussöffnungen 12 vorhanden.

In Fig. 5 ist eine erste Einbettung bzw. Art der Einbettung des Stahlringes 6 in dem zweiten Ausführungsbeispiel dargestellt und in Fig. 6 eine zweite Einbettung bzw. Art der Einbettung des Stahlringes 6 in dem zweiten Ausführungsbeispiel dargestellt.

In der Einbettung gemäß Fig. 5 des Stahlringes 6 in den Kunststoffring 10 ist das radiale innere Ende 13 des Stahlringes 6 bzw. ein radialer innerer Endbereich des Stahlringes 6 vollständig in den Kunststoff des Kunststoffringes 10 eingebettet und das radiale innere Ende des Kunststoffringes 10 ist in Fig. 5 strichliert dargestellt. Lediglich im Bereich der Befestigungsöffnungen 11 an den Laschen 7 ist der Stahlring 6 nicht in den Kunststoff eingebettet und diese Ausnehmung an Kunststoff im Bereich der Befestigungsöffnungen 11 ist in Fig. 5 in analoger Weise zu Fig. 4 durch einen strichlierten Kreis dargestellt. Der Stahlring 6 ist somit bei der Einbettung gemäß der Darstellung in Fig. 5 vollständig in den Kunststoff des Kunststoffringes 10 eingebettet, abgesehen von den Aussparungen an Kunststoff im Bereich der Befestigungsöffnungen 11. Die Formschlussöffnungen 12 dienen in analoger Weise wie in dem Ausführungsbeispiel gemäß den Fig. 2 bis 4 zur Herstellung einer formschlüssigen Verbindung zwischen dem Stahlring 6 und dem Kunststoff des Kunststoffringes 10. Am radialen inneren Ende 13 des Stahlringes 6 sind ferner außerhalb der Laschen 7 die Zähne 9 vorhanden. Die Zähne 9 dienen dazu, eine zusätzliche formschlüssige Verbindung zwischen dem Stahlring 6 und dem Kunststoffring 10 herzustellen. Von dem Stahlring 6 ist auf den Kunststoffring 10 ein hohes Drehmoment zum Bewegen der Lüfterschaufeln 3 aufzubringen. Dabei handelt es sich um ein Drehmoment senkrecht zu der Zeichenebene von Fig. 5, so dass mit den Zähnen 9 dieses Drehmoment formschlüssig auf den Kunststoffring 10 übertragen werden kann. In Fig. 5 ist in analoger Weise zu Fig. 4 das radiale äußere Ende des Kunststoffringes 10 nicht durch eine strichlierte Linie dargestellt.

In Fig. 6 ist eine zweite Einbettung des Stahlringes 6 in den Kunststoffring 10 dargestellt. Im Nachfolgenden werden im Wesentlichen nur die Unterschiede zu Fig. 5 beschrieben. Der Stahlring 6 ist im Bereich der Laschen 7 und damit auch an den Befestigungsöffnungen 11 nicht in den Kunststoff des Kunststoffringes 10 eingebettet. Außerhalb der Laschen 7 ist der Stahlring 6 vollständig in den Kunststoff des Kunststoffringes 10 eingebettet, so dass an den Formschlussöffnungen 12 und an den Zähnen 9 des Stahlringes 6 eine formschlüssige Verbindung zwischen dem Kunststoff des Kunststoffringges 10 und dem Stahlring 6 besteht.

Insgesamt betrachtet sind mit dem erfindungsgemäßen Lüfter 1 und dem erfindungsgemäßen Lüftersystem 26 wesentliche Vorteile verbunden. Bei der Herstellung des Stahlringes 6 sind wesentlich weniger Formschlussöffnungen 12 erforderlich, weil der Stahlring 6 auch an einem radialen inneren Ende 13 bzw. einem radialen inneren Endbereich des Stahlringes 6 in den Kunststoff eingebettet ist. Dadurch können Kosten bei der Herstellung des Stahlringes 6 für die Formschlussöffnungen 12 eingespart werden. Außerdem kann in vorteilhafter Weise aufgrund der geometrisch günstigeren Anordnung des Stahlringes 6 in dem Kunststoffring 10 Bauraum eingespart und dadurch beispielsweise die Kühlung der Viskokupplung 15 verbessert werden, indem die Rückströmöffnungen 21 größer ausgeführt sind.

### Bezugszeichenliste

1 Lüfter
2 Lüfterrad
3 Lüfterschaufeln
4 Luftleitelemente
5 Metallring
6 Stahlring
7 Lasche
8 Radiale innere Auswölbungen an Stahlring
9 Radiale innere Zähne an Stahlring
10 Kunststoffring
11 Befestigungsöffnung
12 Formschlussöffnung
13 Radiales inneres Ende des Metallringes
14 Kupplung
15 Viskokupplung
16 Primärscheibe
17 Grundscheibe
18 Labyrinth
19 Antriebswelle
20 Rotationsachse
21 Rückströmöffnung
22 Radiale Strömung
23 Axiale Rückströmung
24 Befestigungselement
25 Schraube
26 Lüftersystem
27 Befestigungsbohrung in Kupplung
28 Strömungsführungselement

## Patentansprüche

1. Lüfter (1) für ein Kraftfahrzeug, umfassend
- ein Lüfterrad (2), das Lüfterrad (2) umfassend einen Metallring (5) und einen Kunststoffring (10), wobei der Metallring (5) in den Kunststoffring (10) teilweise eingebettet ist und der Metallring (5) vorzugsweise mit wenigstens drei Befestigungsöffnungen (11) zum Befestigen des Lüfters (1) versehen ist,
- an dem Lüfterrad (2) angeordnete Lüfterschaufeln (3), wobei ein radiales inneres Ende (13) des Metallringes (5) in den Kunststoffring (10) eingebettet ist,
**dadurch gekennzeichnet, dass**
das radiale innere Ende (13) des Metallringes (5) vollständig in den Kunststoffring (10) eingebettet ist.

2. Lüfter nach Anspruch 1, **dadurch gekennzeichnet, dass** der Metallring (5) wenigstens drei radiale innere Laschen (7) aufweist und an den Laschen (7) je eine Befestigungsöffnung (11) ausgebildet ist.

3. Lüfter nach Anspruch 1 oder 2, **dadurch gekennzeichnet, dass** der Metallring (5), abgesehen von einem Bereich an den wenigstens drei Befestigungsöffnungen (11), vollständig in den Kunststoffring (10) eingebettet ist.

4. Lüfter nach einem der vorhergehenden Ansprüche, **dadurch gekennzeichnet, dass** die Lüfterschaufeln (3) einteilig aus Kunststoff mit dem Lüfterrad (2) aus, vorzugsweise thermoplastischem, Kunststoff ausgebildet sind und/oder das Lüfterrad (2) und die Lüfterschaufeln (3) mit Spritzgießen hergestellt sind und/oder der Metallring (5) mit Umspritzen in den Kunststoffring (10) eingebettet ist und/oder der Metallring (5) wenigstens 1, 3, 5 oder 10 Formschlussöffnung (12) bzw. Formschlussöffnungen (12) aufweist, welche in den Kunststoffring (10) eingebettet ist bzw. sind und damit der Metallring (5) formschlüssig mit dem Kunststoffring (10) verbunden ist und/oder der Metallring (5) weniger als 20, 30 oder 40 Formschlussöffnungen (12) aufweist und/oder der Metallring (5) wenigstens teilweise, insbesondere vollständig, aus Stahl oder Aluminium besteht und/oder die wenigstens eine Formschlussöffnung (12) und/oder die wenigstens drei Befestigungsöffnungen (11) im Wesentlichen kreisförmig, ellipsenförmig oder quadratisch ausgebildet ist bzw. sind.

5. Lüftersystem (26) für ein Kraftfahrzeug, insbesondere Nutzkraftfahrzeug, umfassend
- einen Lüfter (1),
- eine Kupplung (14), insbesondere Viskokupplung (15), an welcher der Lüfter (1) befestigt ist,
- eine Antriebswelle (19),
**dadurch gekennzeichnet, dass**
der Lüfter (1) gemäß einem oder mehreren der vorhergehenden Ansprüche ausgebildet ist.

6. Lüftersystem nach Anspruch 5, **dadurch gekennzeichnet, dass** der Lüfter (1) mit Befestigungselementen (24), z. B. Schrauben (25) oder Nieten, an der Kupplung (14) befestigt ist, vorzugsweise indem die Befestigungselemente (24) in den Befestigungsöffnungen (11) des Metallringes (5) und in Befestigungsbohrungen (27) in der Kupplung (14) angeordnet sind.

7. Kühlersystem für ein Kraftfahrzeug, umfassend
- eine Kühlerzarge mit einer Lüfteröffnung,
- einen an der Kühlerzarge befestigten Wärmeübertrager,
- einen Lüfter (1) und/oder ein Lüftersystem (26), welches an der Lüfteröffnung angeordnet ist,
**dadurch gekennzeichnet, dass**
der Lüfter (1) gemäß einem oder mehreren der Ansprüche 1 bis 4 ausgebildet ist und/oder das Lüftersystem (26) gemäß Anspruch 5 oder 6 ausgebildet ist.

## Claims

1. A fan (1) for a motor vehicle, comprising
- a fan impeller (2), the fan impeller (2) comprising a metal ring (5) and a plastic ring (10), wherein the metal ring (5) is partially embedded in the plastic ring (10) and the metal ring (5) is preferably provided with at least three fixing holes (11) for fixing the fan (1),
- fan blades (3) arranged on the fan impeller (2), wherein a radial inner end (13) of the metal ring (5) is embedded in the plastic ring (10),
**characterised in that**
the radial inner end (13) of the metal ring (5) is fully embedded in the plastic ring (10).

2. The fan according to claim 1, **characterised in that** the metal ring (5) has at least three radial inner lugs (7) and one fixing hole (11) each is formed on the lugs (7).

3. The fan according to claim 1 or 2, **characterised in that** the metal ring (5), apart from an area on the at least three fixing holes (11), is fully embedded in the plastic ring (10).

4. The fan according to one of the preceding claims, **characterised in that** the fan blades (3) are made from plastic in one piece, with the fan impeller (2) preferably from a thermoplastic and/or the fan impeller (2) and the fan blades (3) are produced by injection moulding and/or the metal ring (5) is embedded in the plastic ring (10) by overmoulding and/or the metal ring (5) has at least 1, 3, 5 or 10 form-fit aperture (12) or form-fit apertures (12) which is or are embedded in the plastic ring (10) and thus the metal ring (5) is connected to the plastic ring (10) in a form-fit manner and/or the metal ring (5) has less than 20, 30 or 40 form-fit apertures (12) and/or the metal ring (5) consists at least partially, in particular completely, of steel or aluminium and/or the at least one form-fit aperture (12) and/or the at least three fixing holes (11) is or are formed in a substantially circular, elliptical or square manner.

5. A ventilation system (26) for a motor vehicle, in particular a utility vehicle, comprising
- a fan (1),
- a coupling (14), in particular a viscous coupling (15), on which the fan (1) is fixed,
- a drive shaft (19),
**characterised in that**
the fan (1) is formed according to one or more of the preceding claims.

6. The ventilation system according to claim 5, **characterised in that** the fan (1) is fixed on the coupling (14) with fixing elements (24), e.g. screws (25) or rivets, preferably by arranging the fixing elements (24) in the fixing holes (11) of the metal ring (5) and in fixing bores (27) in the coupling (14).

7. A cooling system for a motor vehicle, comprising
- a cooler frame having a fan opening,
- a heat exchanger fixed on the cooler frame,
- a fan (1) and/or a ventilation system (26) which is arranged on the fan opening,
**characterised in that**
the fan (1) is formed according to one or more of claims 1 to 4 and/or the ventilation system (26) is formed according to claim 5 or 6.

## Revendications

1. Ventilateur (1) pour un véhicule automobile, comprenant
- une roue de ventilateur (2), la roue de ventilateur (2) comprenant un anneau métallique (5) et un anneau en matière plastique (10), où l'anneau métallique (5) est partiellement encastré dans l'anneau en matière plastique (10), et l'anneau métallique (5) est doté de préférence au moins de trois ouvertures de fixation (11) servant à la fixation du ventilateur (1),
- des pales de ventilateur (3) disposées sur la roue de ventilateur (2),
où une extrémité intérieure radiale (13) de l'anneau métallique (5) est encastrée dans l'anneau en matière plastique (10),
**caractérisé en ce que**
l'extrémité intérieure radiale (13) de l'anneau métallique (5) est complètement encastrée dans l'anneau en matière plastique (10).

2. Ventilateur selon la revendication 1, **caractérisé en ce que** l'anneau métallique (5) présente au moins trois languettes intérieures radiales (7), et une ouverture de fixation (11) est configurée à chaque fois sur les languettes (7).

3. Ventilateur selon la revendication 1 ou 2, **caractérisé en ce que** l'anneau métallique (5), à l'exception d'une zone située sur les ouvertures de fixation (11) au moins au nombre de trois, est complètement encastré dans l'anneau en matière plastique (10).

4. Ventilateur selon l'une quelconque des revendications précédentes, **caractérisé en ce que** les pales de ventilateur (3) sont configurées en formant une seule et même pièce avec la roue de ventilateur (2), ladite pièce étant en matière plastique, de préférence en matière thermoplastique, et / ou la roue de ventilateur (2) et les pales de ventilateur (3) sont fabriquées par moulage par injection, et / ou l'anneau métallique (5) est encastré, par surmoulage, dans l'anneau en matière plastique (10), et / ou l'anneau métallique (5) présente au moins 1 ouverture (12) réalisée par complémentarité de forme ou 3, 5 ou 10 ouvertures (12) réalisées par complémentarité de forme qui est ou sont encastrée(s) dans l'anneau en matière plastique (10) et, ainsi, l'anneau métallique (5) est assemblé avec l'anneau en matière plastique (10) par complémentarité de forme, et / ou l'anneau métallique (5) présente moins de 20, 30 ou 40 ouvertures (12) réalisées par complémentarité de forme, et / ou l'anneau métallique (5) est, au moins en partie, en particulier en totalité, en acier ou en aluminium, et / ou l'ouverture (12) au moins au nombre de un réalisée par complémentarité de forme et / ou les ouvertures de fixation (11) au moins au nombre de trois est ou sont configurée(s) pratiquement en forme de cercle, en forme d'ellipse ou en forme de parallélépipède.

5. Système de ventilateur (26) pour un véhicule automobile, en particulier un véhicule utilitaire, ledit système comprenant
- un ventilateur (1),
- un accouplement (14), en particulier un accouplement visqueux (15) sur lequel est fixé le ventilateur (1),
- un arbre d'entraînement (19),
**caractérisé en ce que**
le ventilateur (1) est conçu selon l'une quelconque ou plusieurs des revendications précédentes.

6. Système de ventilateur selon la revendication 5, **caractérisé en ce que** le ventilateur (1) est fixé, sur l'accouplement (14), par des éléments de fixation (24), par exemple des vis (25) ou des rivets, tandis que les éléments de fixation (24) sont disposés de préférence dans les ouvertures de fixation (11) de l'anneau métallique (5) et dans des perçages de fixation (27) formés dans l'accouplement (14).

7. Système de refroidisseur pour un véhicule automobile, comprenant
- un châssis de refroidisseur comportant une ouverture de ventilateur,
- un échangeur de chaleur fixé sur le châssis du refroidisseur,
- un ventilateur (1) et / ou un système de ventilateur (26) qui est disposé sur l'ouverture de ventilateur,
**caractérisé en ce que**
le ventilateur (1) est conçu selon l'une quelconque ou plusieurs des revendications 1 à 4 et / ou **en ce que** le système de ventilateur (26) est conçu selon la revendication 5 ou 6.
